# DEMANDE DE BREVET EUROPEEN

(11) **EP 2 316 700 A1**
(43) Date de publication de la demande: **04.05.2011**
(21) Numéro de dépôt: 10185531.0
(22) Date de dépôt: 01.10.2010
(51) Int. Cl.: B60S 1/50

(54) **Récipient pour véhicule automobile, notamment boîte de dégazage ou réservoir de liquide de lave-glace**

(30) Priorité: 27.10.2009 FR 0957523
(71) Demandeur: Peugeot Citroën Automobiles SA, 78140 Vélizy-Villacoublay (FR)
(72) Inventeur: Appasamy, Jean-Michel, 78760, Jouars Ponchartrain (FR)
(74) Mandataire: Fosse, Danièle

(57) **Abrégé**

Le récipient comprend un goulot de remplissage (20) fermé par un bouchon (30) et est destiné à être monté sous le capot du véhicule de telle sorte que le goulot de remplissage (20) débouche vers le haut. Le goulot de remplissage (20) est constitué en deux parties distinctes, à savoir un tube inférieur (11) lié rigidement au corps principal (10) du récipient et un tube supérieur (21) portant le bouchon (30). Il est prévu un montage télescopique étanche du tube supérieur (21) sur le tube inférieur (11) de telle sorte que ledit tube supérieur (21) avec le bouchon (30) puisse coulisser vers le bas sous un certain effort. Des moyens sont prévus pour maintenir le tube supérieur (21) et le bouchon (30) remis vers le haut en position d'origine.

Véhicules automobiles. Boîtes de dégazage de circuit de refroidissement de véhicule automobile. Réservoir de liquide de lave-glace de véhicule automobile.

## Description

La présente invention se rapporte à un récipient qui est destiné à être placé sous le capot d'un véhicule automobile et qui peut être réutilisé en cas de choc. Ce récipient peut être, à titre d'exemple non limitatif de l'objet et de la portée de la présente invention, une boîte de dégazage du circuit de refroidissement ou un réservoir de liquide lave-glace du véhicule.

La présente invention se rapporte également à un véhicule automobile équipé d'un tel récipient.

Si l'on prend l'exemple de la boîte de dégazage, qui permet de réduire la présence de gaz circulant classiquement dans le circuit de refroidissement d'un véhicule, celle-ci est située sous le capot du véhicule. La législation en matière de choc des véhicules automobiles, en particulier de choc piéton ou de choc tête, impose qu'une certaine énergie soit absorbée par le capot dans un laps de temps maximum donné.

En cas de choc tête, par exemple, dans la zone du capot, c'est la partie supérieure de la boîte de dégazage avec son bouchon qui se rétracte.

Des solutions techniques existent déjà pour que la partie rétractée soit remise dans son état d'origine après le choc.

Ainsi, à titre d'exemple, le document FR 2 879 517 décrit un récipient pour véhicule automobile, tel qu'un boîtier de dégazage ou un récipient pour liquide de lave-glace, qui comprend un goulot de remplissage pouvant s'abaisser. Le récipient comprend un goulot de remplissage fermé par un bouchon. Le récipient est destiné à être monté sous un capot de véhicule automobile de telle manière que le goulot de remplissage débouche vers le haut. Le récipient comprend au moins une zone flexible permettant au goulot de remplissage de s'abaisser lorsqu'une déformation du capot résultant d'un choc exerce un effort sur le bouchon ou sur le goulot de remplissage.

Un autre exemple est donné par le document FR 2 458 679, qui décrit un agencement de boîte de dégazage dans un circuit de refroidissement par liquide d'un moteur thermique. La boîte de dégazage est reliée au circuit de refroidissement par au moins un conduit souple. Elle est montée sur un support articulé autour d'un axe fixe pour autoriser un basculement limité de la boîte de dégazage et permettre, ainsi, d'accéder au bouchon de remplissage. Le support comprend deux bras articulés autour de deux axes alignés, et il est prévu au moins une butée limitant le basculement de la boîte de dégazage.

A titre d'exemple encore, le document FR 2 913 456 décrit un réservoir de dégazage comprenant un orifice d'accès à son volume intérieur, qui est distinct de l'orifice d'échappement du fluide de refroidissement, en cas de surpression, une trappe mobile entre une position d'obturation de l'orifice d'accès et une position de libération de cet orifice d'accès, des moyens de verrouillage de cette trappe, ainsi qu'un organe de déplacement des moyens de verrouillage, qui est réalisé en un alliage à mémoire de forme. Cet organe de déplacement permet de déplacer les moyens de verrouillage de leur position de verrouillage vers leur position de déverrouillage, lorsque la température régnant dans le réservoir devient inférieure à une valeur prédéterminée.

Enfin, un autre exemple est donne par le document DE 100 50 214 A1, qui décrit un réservoir de liquide de lave-glace. Le réservoir présente un goulot de remplissage qui s'étend selon une direction sensiblement verticale, un orifice de remplissage et un bouchon pour cet orifice. Dans cet exemple, il est prévu un système de coulissement du goulot de remplissage.

Le but de la présente invention est de fournir un nouveau récipient pour véhicule automobile, notamment un boîtier de dégazage ou un réservoir de liquide de lave-glace, qui puisse, grâce à sa structure, être non seulement en conformité avec les normes relatives aux chocs tête mais aussi réutilisable en cas de choc.

autre but de la présente invention est de fournir un tel nouveau récipient réutilisable en cas de choc, qui puisse être intégré dans le bloc avant d'un véhicule automobile, y compris dans des zones difficilement accessibles.

Enfin, c'est également un but de la présente invention de fournir un tel nouveau récipient, qui soit de conception et de réalisation simples, et qui soit économique de ce fait mais aussi parce qu'étant réutilisable après un choc il ne nécessite pas de main d'oeuvre pour son remplacement.

Pour parvenir à ces buts, la présente invention a pour objet un récipient pour véhicule automobile, notamment un boîtier de dégazage ou un réservoir de liquide de lave-glace, qui comprend un goulot de remplissage fermé par un bouchon et qui est destiné à être monté sous le capot du véhicule de telle sorte que le goulot de remplissage débouche vers le haut. Le goulot de remplissage est constitué en deux parties distinctes, à savoir un tube inférieur lié rigidement au corps principal du récipient et un tube supérieur portant le bouchon. Il est prévu un montage télescopique étanche du tube supérieur sur le tube inférieur, de telle sorte que ledit tube supérieur avec le bouchon puisse coulisser vers le bas sous un certain effort. Des moyens sont prévus pour maintenir le tube supérieur et le bouchon remis ensuite vers le haut en position d'origine.

Le montage télescopique étanche comporte une pluralité de joints d'étanchéité entre le tube inférieur et le tube supérieur, et ces joints d'étanchéité sont montés dans des gorges de la surface externe du tube inférieur.

Les moyens pour maintenir le tube supérieur et le bouchon remis vers le haut en position d'origine sont constitués, selon un mode de réalisation préféré de l'invention, par des gorges de la surface interne du tube supérieur dans lesquelles viennent se placer les joints d'étanchéité en position haute - ou position d'origine - du tube supérieure.

Les joints d'étanchéité, selon le même mode de réalisation préféré de l'invention, sont au nombre de deux, et sont, de préférence, des joints toriques.

De préférence également, les gorges de la surface externe du tube inférieur et les gorges de la surface interne du tube supérieur sont des gorges de section sensiblement semi-circulaire, de façon à s'adapter à la section des joints toriques.

Il est avantageusement prévu, à la base du tube inférieur, un méplat faisant fonction de butée du mouvement vers le bas du tube supérieur.

Enfin, le bouchon est monté escamotable sur le goulot de remplissage, par vissage sur la partie supérieure du tube supérieur.

L'invention a également pour objet un véhicule automobile, qui comprend un récipient conforme à celui décrit ci-dessus dans ses grandes lignes.

Ce récipient peut être la boîte de dégazage du circuit de refroidissement du véhicule, ou bien le réservoir de liquide de lave-glace.

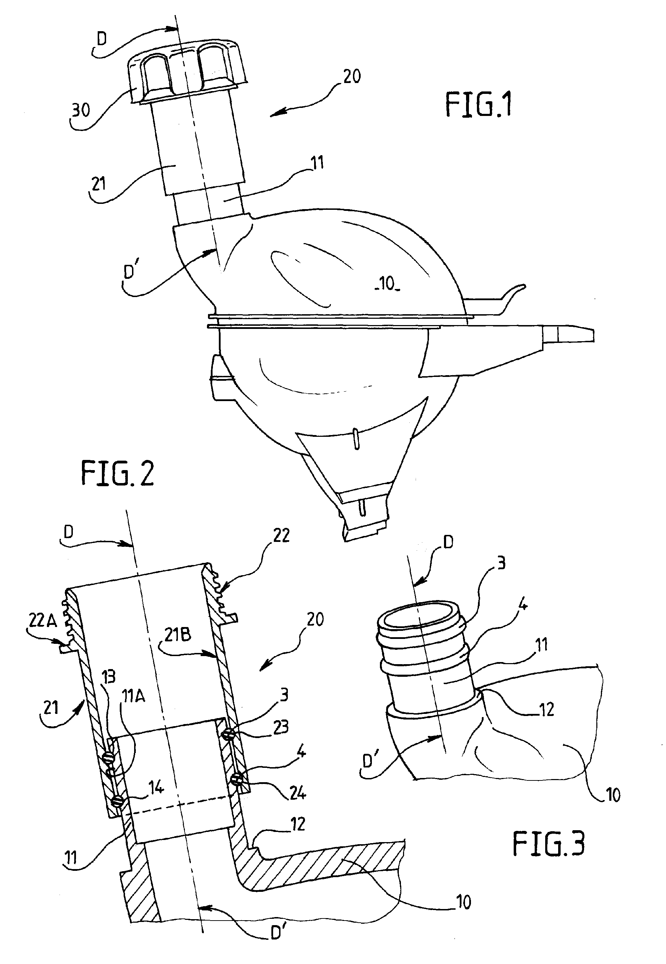

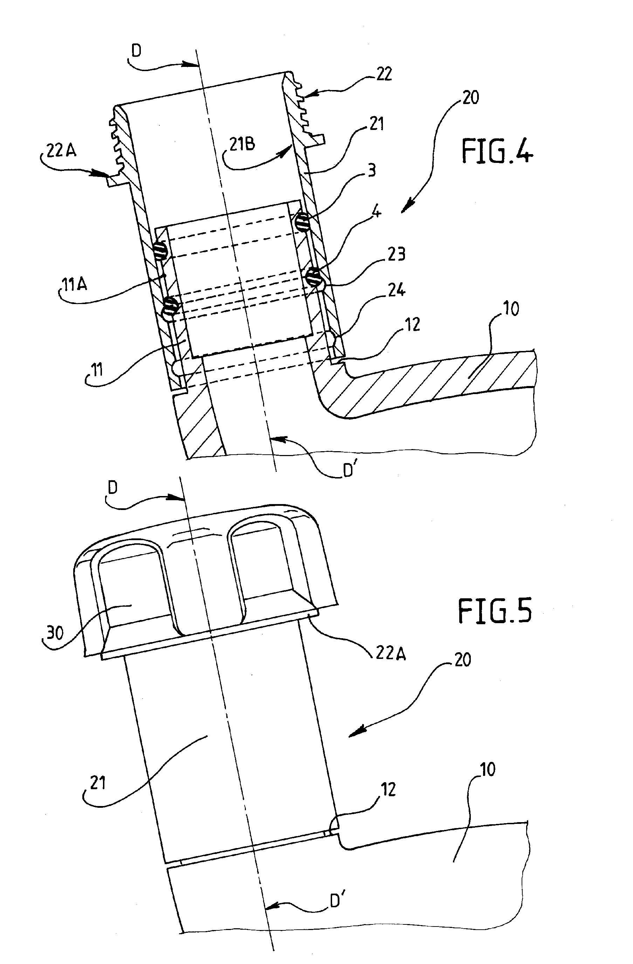

D'autres buts, avantages et caractéristiques de l'invention apparaîtront dans la description qui suit d'un exemple de réalisation de l'invention, non limitatif de l'objet et de la portée de la présente demande de brevet, accompagnée de dessins dans lesquels :
● la figure 1 est une vue en perspective de la boîte de dégazage selon la présente invention, avant un choc,
● la figure 2 est une vue en coupe longitudinale de la boîte de dégazage de la figure 1, également avant un choc, le bouchon étant enlevé,
● la figure 3 est une vue en perspective du tube inférieur du goulot de la boîte de dégazage des figures 1 et 2, qui montre les joints d'étanchéité du goulot de remplissage de la boîte de dégazage selon l'invention,
● la figure 4 est une vue en coupe longitudinale de la boîte de dégazage selon la présente invention, après un choc, le bouchon étant enlevé, et
● la figure 5 est une vue en perspective de la boîte de dégazage de la figure 4, fermée par un bouchon.

En se reportant au dessin de la figure 1, on a représenté, à titre d'exemple de récipient selon la présente invention, un boîtier de dégazage de circuit de refroidissement d'un véhicule automobile. Ce boîtier de dégazage est monté sous le capot du véhicule.

Le boîtier de dégazage se présente sous la forme d'un corps principal creux, de référence 10, de forme sensiblement sphérique, faisant fonction de réservoir de liquide de refroidissement.

Le corps principal 10 est prolongé par un goulot de remplissage, de référence générale 20, fermé par un bouchon 30 à sa section supérieure. Le goulot de remplissage 20 est sensiblement cylindrique et s'étend selon une direction sensiblement verticale ou voisine de la direction verticale illustrée par l'axe DD'.

Le goulot de remplissage 20 est mieux représenté sur le dessin de la figure 2. Il est constitué en deux parties distinctes, à savoir un tube inférieur 11 monobloc avec le corps principal 10 et un tube supérieur 21 portant le bouchon 30. Il est prévu un montage télescopique étanche du tube supérieur 21 sur le tube inférieur 11 de telle sorte que le tube supérieur 21 avec le bouchon 30 puisse coulisser vers le bas sous un certain effort provoqué par un choc.

Des moyens sont prévus pour maintenir en position le tube supérieur 21 et le bouchon 30, lorsque ceux-ci sont remis vers le haut en position d'origine.

Le montage télescopique du tube supérieur 21 sur le tube inférieur 11 est étanche grâce à l'interposition de deux joints d'étanchéité 3 et 4 entre le tube inférieur 11 et le tube supérieur 21. Les deux joints d'étanchéité 3 et 4 sont montés dans des gorges, respectivement 13 et 14, de la surface externe 11 A du tube inférieur 11.

Les moyens pour maintenir le tube supérieur 21 et le bouchon 30 remis vers le haut en position d'origine sont constitués par des gorges, respectivement 23 et 24, de la surface interne 21 B du tube supérieur 21 dans lesquelles viennent se placer les joints d'étanchéité 3 et 4, respectivement, en position haute - ou position d'origine - du tube supérieure 21.

Les joints d'étanchéité 3 et 4, représentés également sur la figure 3, sont, de préférence, des joints toriques. De manière correspondante, les gorges 13 et 14 de la surface externe 11 A du tube inférieur 11 et les gorges 23 et 24 de la surface interne 21 B du tube supérieur 21 sont des gorges de section sensiblement semi-circulaire de façon à s'adapter à la section circulaires des joints toriques 3 et 4.

A la base du tube inférieur 11, il est prévu un méplat 12 faisant fonction de butée du mouvement vers le bas sous un certain effort du tube supérieur 21.

Le bouchon 30 est monté vissé sur la partie supérieure 22 du tube supérieur 21. Il peut être vissé jusqu'à ce que le bouchon 30 atteigne la collerette 22A de butée du mouvement de vissage.

Le fonctionnement du goulot de remplissage 20 à montage télescopique étanche est le suivant :

En cas de choc, c'est la partie supérieure du goulot de remplissage 20, à savoir le tube supérieur 21 et le bouchon 30, qui coulisse vers le bas, par conséquent vers le corps principal 10 de la boîte de dégazage, comme cela est représenté sur le dessin des figures 4 et 5. Sous un certain effort appliqué sur sa partie supérieure, le tube supérieur 21 coulisse vers le bas sur le tube inférieur 11. Les gorges 23 et 24 s'éloignent des joints d'étanchéité, respectivement 3 et 4. Le mouvement vers le bas du tube supérieur 21 est limité par le méplat annulaire 12 formant butée.

Après le choc, on peut facilement remettre le tube supérieur 21 dans sa position d'origine des figures 1 et 2 en le faisant coulisser vers le haut jusqu'à ce que les gorges 23 et 24 viennent se placer sur les joints d'étanchéité 3 et 4, respectivement. Ainsi, les joints d'étanchéité jouent également le rôle de moyens de maintien du tube supérieur 21 avec le bouchon 30, lorsque des derniers sont remis vers le haut en position d'origine.

Le récipient décrit ci-dessus constitue un perfectionnement aux récipients à partie supérieure fusible ou rétractable connus de l'art antérieur, et ce nouveau récipient présente de nombreux avantages, parmi lesquels les avantages suivants :
● il est réutilisable en cas de choc, et donc économique puisqu'on a pas besoin de le changer,
● il peut être implanté dans les zones peu inaccessibles du bloc avant du véhicule,
● il est réalisé en conformité avec les normes relatives aux chocs, en particulier les tests de sécurité passive des véhicules automobiles de l'organisme européen Euro NCAP (acronyme de « European New Car Assessment Program),
● il est étanche, et de réalisation relativement simple.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Récipient pour véhicule automobile, notamment boîtier de dégazage ou réservoir de liquide de lave-glace, qui comprend un goulot de remplissage (20) fermé par un bouchon (30) et qui est destiné à être monté sous le capot du véhicule de telle sorte que le goulot de remplissage (20) débouche vers le haut, **caractérisé en ce que** ledit goulot de remplissage (20) est constitué en deux parties distinctes, à savoir un tube inférieur (11) lié rigidement au corps principal (10) du récipient et un tube supérieur (21) portant le bouchon (30), et **en ce qu'**il est prévu un montage télescopique étanche du tube supérieur (21) sur le tube inférieur (11) de telle sorte que ledit tube supérieur (21) avec le bouchon (30) puisse coulisser vers le bas sous un certain effort, et **en ce que** des moyens sont prévus pour maintenir le tube supérieur (21) et le bouchon (30) remis vers le haut en position d'origine.

2. Récipient selon la revendication 1, **caractérisé en ce que** ledit montage télescopique étanche comporte une pluralité de joints d'étanchéité (3, 4) entre le tube inférieur (11) et le tube supérieur (21), lesdits joints d'étanchéité (3, 4) étant montés dans des gorges (13, 14) de la surface externe (11 A) du tube inférieur (11).

3. Récipient selon l'une quelconque des revendications 1 et 2, **caractérisé en ce que** les moyens pour maintenir le tube supérieur (21) et le bouchon (30) remis vers le haut en position d'origine sont constitués par des gorges (23, 24) de la surface interne (21 B) du tube supérieur (21) dans lesquelles viennent se placer les joints d'étanchéité (3, 4) en position haute - ou position d'origine - du tube supérieure (21).

4. Récipient selon l'une quelconque des revendications 2 et 3, **caractérisé en ce que** les joints d'étanchéité (3, 4) sont au nombre de deux.

5. Récipient selon l'une quelconque des revendications 2 à 4, **caractérisé en ce que** les joints d'étanchéité (3, 4) sont des joints toriques.

6. Récipient selon l'une quelconque des revendications 2 à 5, **caractérisé en ce que** les gorges (13, 14) de la surface externe (11 A) du tube inférieur (11) et les gorges (23, 24) de la surface interne (21 B) du tube supérieur (21) sont des gorges de section sensiblement semi-circulaire de façon à s'adapter à la section des joints toriques (3, 4).

7. Récipient selon la revendication 1, **caractérisé en ce qu'**il est prévu à la base du tube inférieur (11) un méplat (12) faisant fonction de butée du mouvement vers le bas du tube supérieur (21).

8. Récipient selon la revendication 1, **caractérisé en ce que** le bouchon (30) est monté vissé sur la partie supérieure (22) du tube supérieur (21).

9. Véhicule automobile, **caractérisé** ne ce qu'il comprend un récipient conforme à l'une quelconque des revendications 1 à 8.

10. Véhicule automobile selon la revendication 9, **caractérisé** ne ce que ledit récipient est la boîte de dégazage du circuit de refroidissement du véhicule.

11. Véhicule automobile selon la revendication 9, **caractérisé** ne ce que ledit récipient est un réservoir de liquide de lave-glace.
